(19) Europäisches Patentamt
European Patent Office
Office européen des brevets

(11) **EP 1 601 250 B1**

(12) **EUROPEAN PATENT SPECIFICATION**

(45) Date of publication and mention
of the grant of the patent:
**23.05.2012 Bulletin 2012/21**

(21) Application number: **04717087.3**

(22) Date of filing: **04.03.2004**

(51) Int Cl.:
*A01N 31/02* (2006.01)    *A01N 47/46* (2006.01)
*A01N 47/14* (2006.01)    *A01N 47/08* (2006.01)
*A01N 43/88* (2006.01)    *A01N 29/02* (2006.01)

(86) International application number:
**PCT/EP2004/002227**

(87) International publication number:
**WO 2004/077949 (16.09.2004 Gazette 2004/38)**

(54) **COMPOSITIONS FOR CONTROLLING PLANT-INJURIOUS ORGANISMS**

ZUSAMMENSETZUNGEN FÜR DIE BEKÄMPFUNG VON PFLANZENSCHÄDIGENDEN ORGANISMEN

COMPOSITIONS POUR LA LUTTE CONTRE LES ORGANISMES NUISIBLES AUX PLANTES

(84) Designated Contracting States:
**AT BE BG CH CY CZ DE DK EE ES FI FR GB GR HU IE IT LI LU MC NL PL PT RO SE SI SK TR**

(30) Priority: **05.03.2003 US 451676 P**

(43) Date of publication of application:
**07.12.2005 Bulletin 2005/49**

(73) Proprietor: **Kanesho Soil Treatment Bvba**
**1200 Brussel (BE)**

(72) Inventors:
• **AMMERMANN, Eberhard**
**64646 Heppenheim (DE)**
• **STIERL, Reinhard**
**67251 Freinsheim (DE)**
• **STRATHMANN, Siegfried**
**67117 Limburgerhof (DE)**
• **SCHÖFL, Ulrich**
**68782 Brühl (DE)**
• **COTTER, Henry, Van Tuyl**
**Raleigh, NC 27613 (US)**
• **CHRISTEN, Thomas**
**67125 Dannstadt (DE)**

(74) Representative: **Pohl, Michael Friedrich**
**Reitstötter, Kinzebach & Partner (GbR)**
**Patentanwälte**
**Ludwigsplatz 4**
**67059 Ludwigshafen (DE)**

(56) References cited:
**WO-A-02/074083    US-A1- 2003 219 355**

• **DATABASE WPI Section Ch, Week 199937 Derwent Publications Ltd., London, GB; Class C03, AN 1999-439334 XP002185561 & JP 11 180807 A (MITSUI PETROCHEM IND CO LTD), 6 July 1999 (1999-07-06)**

**Description**

The present invention relates to a composition for controlling plant-injurious organisms, in particular those organisms which dwell in soils intended for the cultivation of plants, and in particular for controlling harmful fungi and nematodes. The invention furthermore relates to a method for controlling such plant-injurious organisms by allowing the components of the composition according to the invention jointly to act on the plant-injurious organisms or their environment.

Every year large yield losses are incurred owing to an attack of useful plants by plant-injurious organisms. A substantial percentage of the yield losses can be attributed to those organisms which dwell in the soils intended for the cultivation with the useful plant. Harmful fungi or nematodes constitute a particular problem. An important aspect in crop protection is therefore the disinfection or disinfestation of the soil, i.e. the treatment of the soil with suitable compositions which destroy the plant-injurious organisms or, in the case of animal pests, also their eggs and/or larvae in the soil, or which prevent the propagation of the harmful organisms (see also Römpp Chemielexikon [Chemical dictionary], 10th edition, Georg Thieme-Verlag, Stuttgart, 1996, p. 485, Ullmann's Enzydopedia of Industrial Chemistry, 5th Edition on CD-ROM, Wiley-VCH 1997, Weinheim, chapter "Fungicides, Agricultural 4.3 and 4.5", chapter "Nematocidds, 3.2 and 4.1", chapter "Insect Control 11".)

An important group of soil disinfectants are methyl isocyanate and compounds which release methyl isocyanate, such as dazomet (3,5-dimethyltetrahydro-2H-1,3,5-thiadiazine-2-thione) and metam (methyldithiocarbamic acid, in particular its sodium salt). In addition to a fungicidal and nematicidal action, these substances are also distinguished by an action against soil-living insects. Their disadvantages are the high application rates required for an effective control of the harmful organism, in particular with a view to the high phytotoxicity of these compounds. There exists also the problem that populations of the harmful organisms in lower soil strata are not destroyed completely, which may give rise to a renewed attack on the useful plant.

Another important class of soil disinfectants are aliphatic halogen compounds, among these in particular 1,3-dichloropropene and trichloronitromethane (chloropicrin). These agents are distinguished by a potent fungicidal and nematicidal action. Again, the application rates required are very high.

It is an object of the present invention to provide a composition for controlling plant-injurious organisms (hereinbelow also referred to as plant protectant) which overcomes the disadvantages of the prior art.

Surprisingly, it has been found that the efficacy of the plant protectants dichloropropene, chloropicrin, methyl isothiocyanate and substances which release methyl isothiocyanate, all of which are known per se, can be improved when they are used jointly with dimethyl disulfide.

Chloropicrin is known from for example, JP 11 180 807 and dimethyl disulfide from WO 01/074 083.

The present invention therefore relates to a composition for controlling plant-injurious organisms comprising:

   i. at least one active component A selected from among 1,3-dichloropropene, trichloronitromethane (chloropicrin), methyl isothiocyanate and substances which release methyl isothiocyanate, and

   ii. dimethyl disulfide as component B.

By jointly applying the component A with dimethyl disulfide, an increased activity of the active components A, in particular against harmful fungi, nematodes, their eggs and their larvae, is achieved, so that a lower application rate of active component A is required for effectively controlling harmful organisms than when this component is employed on its own. This increased activity exceeds a purely additive effect (synergism).

Moreover, the joint application of the components A with dimethyl disulfide leads to a widened spectrum of action regarding other plant-injurious organisms. Another advantage is that, by jointly using the components A with dimethyl disulfide, even harmful organisms in lower soil strata can be destroyed efficaciously. Advantageously, joint application of components A and B does not result in phytotoxic activity against cultured plants, e.g. against roots or shoots or against other parts of the plants such as leaves or fruits.

The present invention therefore also relates to a method for controlling plant-Injurious organisms, which comprises applying the active components A jointly with dimethyl disulfide in such an amount that they bring about the destruction of plant-injurious organisms, their eggs or their larvae, on the plant-injurious organisms, their eggs, their larvae or their environment.

Since not only dimethyl disulfide, but also the substances A, are volatile compounds or compounds from which the volatile active component is liberated under ambient conditions (moisture, temperature), these compositions are particularly suitable for the disinfection of soils. The present invention therefore also relates to the use of the compositions according to the invention for the disinfection of soils (soil disinfection). In the present context and hereinbelow, soils are understood as meaning any substrate on which the useful plants grow or are planted.

The compositions according to the invention are suitable in principle for controlling all those plant-injurious organisms which can also be controlled with the active ingredients A alone. These include, for example, mites, soil-dwelling insects, in particular harmful fungi and nematodes.

The compositions according to the invention are particularly suitable for controlling nematodes. The class of the nematodes includes for example root-knot nematodes, for example Meloidogyne hapla, Meloidogyne incognita, Meloidogyne javanica, cyst nematodes, for example Globodera pallida, Globodera rostochiensis, Heterodera avenae, Heterodera glycines, Heterodera schachtii, migratory endoparasites and semi-endoparasitic nematodes, for example Helicotylenchus multicinctus, Hirschmanniella oryzae, Hoplolaimus spp, Pratylenchus brachyurus, Pratylenchus fallax, Pratylenchus penetrans, Pratylenchus vulnus, Radopholus similis, Rotylenchus reniformis, Scutellonema bradys, Tylenchulus semipenetrans, stem eelworms and foliar nematodes, for example Anguina tritici, Aphelenchoides besseyi, Ditylenchus angustus, Ditylenchus dipsaci, and vectors of viruses, for example Longidorus spp, Trichodorus christei, Trichodorus viruliferus, Xiphinema index, Xiphinema mediterraneum.

The compositions according to the invention are also particularly important for controlling a multiplicity of harmful fungi in various crop plants such as cotton, vegetable plants (for example cucumbers, beans, tomatoes, potatoes and cucurbits), barley, turf, oats, bananas, coffee, maize, fruit plants, rice, rye, soybeans, wine, wheat, ornamentals, sugar cane and a multiplicity of seeds.

Furthermore, these compositions are especially suitable for controlling fungi which occur in the soil (soil-bome fungi) such as, for example, Pythium ultimum, Pythium debaryanum, Pythium irregulare, Pythium silvaticum, Pythium splendens, Pythium aphanidermatum, Phytophthora fragariae, Phytophthora capsici, Rhizoctonia solani, Thielaviopsis basicola, Fusarium solani, Fusarium avenaceum, Fusarium oxysporum, Sclerotinia sclerotiorum and others.

Moreover, the compositions according to the invention are suitable for controlling harmful fungi on aerial plant parts such as Erysiphe graminis (powdery mildew) in cereals, Erysiphe cichoracearum and Sphaerotheca fuliginea in curcurbis, Podosphaera leucotricha in apples, Uncinula necator in grapevines, Puccinia species in cereals, Rhizoctonia species in cotton, rice and turf, Ustilago species in cereals and sugar cane, Venturia inaequalis (scab) in apples, Helminthosporium species in cereals, Septoria nodorum in wheat, Botrytis cinerea (gray mold) in strawberries, vegetables, ornamentals and grapevines, Cercospora arachidicola in peanuts, Pseudocercosporella herpotrichoides in wheat and barley, Pyricularia oryzae in rice, Phytophthora infestans in potatoes and tomatoes, Plasmopara viticola in grapevines, Pseudoperonospora species in hops and cucumbers, Alternaria species in vegetables and fruit, Mycosphaerella species in bananas, and Verticillium species.

The products according to the invention can furthermore be used in the protection of materials (for example the protection of timber), for example against Paecilomyces variotii.

To control the plant-injurious organisms, one or more active ingredient A, preferably exactly one active ingredient A, will be applied simultaneously together with dimethyl disulfide, either jointly or separately, or else successively within a short period of time, the sequence in the case of separate application generally having no impact on the success of the control measure. In many cases, however, the application of the active ingredient A in question together with dimethyl disulfide in a joint formulation has proved particularly successful. However, joint application of separate formulations of components A and B is also successful.

The application of the composition according to the invention, or the joint application of the at least one active component A together with dimethyl disulfide is carried out in a manner known per se. In principle, the active ingredient A and dimethyl disulfide can be applied by spraying or dusting the seeds, the plants or the soils before or after planting or before or after plant emergence. In the case of soil disinfection, it has proved advantageous to incorporate the active component A together with dimethyl disulfide into the soil in separate formulations, or to incorporate them into the soil as one formulation of both ingredients A and B, before plant emergence, but advantageously before planting.

Incorporation of the active components A and B into the soil can be achieved by the means which are usually applied for incorporating the single components A or B into the soil, e.g. by drenching the soil with a liquid aqueous composition containing the active ingredient, i.e. component A and/or B or by incorporating the active ingredients as such or as a solid composition such as a powder composition or a granule composition. Incorporation as a solid composition is especially preferred for compounds which release methylisocyanate, e.g. for dazomet.

In accordance with the invention, dimethyl disulfide is used in a synergistic amount together with the active component A in question, i.e. in an amount which leads to an increased activity of the active component A. The active component A and dimethyl disulfide are usually employed in a weight ratio A:B in the range of from 10000:1 to 1:50, advantageously in the range of from 1000:1 to 1:20 and especially from 500:1 to 1:10. Employing as small amounts of dimethyl disulfide as possible has proved advantageous, also because of its unpleasant odor. Accordingly, the active component A and dimethyl disulfide will preferably be employed in a weight ratio of A:B in the range of from 1000:1 to 1:2 more preferably in the range of from 500:1 to 1:1 and most preferably from 500:1 to 1:1.

An advantageous effect against plant-injurious organisms is generally achieved when the active ingredient A is present in the soil in an amount of from 0.01 to 500 g/tonne, in particular 0.1 to 200 g/tonne and specifically in the range of from 1 to 100 g/tonne of soil. This also applies analogously to the application rate of dimethyl disulfide. In field applications, this generally corresponds to an amount of from 10 g/ha to 1 000 kg/ha, in particular 100 g/ha to 400 kg/ha and specifically 200 g/ha to 200 kg/ha. The actual application rate depends in the known manner on the nature and severity of the infection/infestation with the harmful organism, the type of the active ingredient A, and the form of application.

For compounds releasing methylisocyanate, such as dazomet, the application rate is preferably from 20 g/ha to 100 kg/ha, and especially from 100 g/ha to 50 kg/ha.

For chloropicrin the application rate is preferably from 100 g/ha to 200 kg/ha, and especially from 1 kg/ha to 100 kg/ha.

For 1,3-dichloropropene the application rate is preferably from 1 g/ha to 100 kg/ha, more preferably from 10 g/h to 100 kg/ha and especially from 100 g/ha to 50 kg/ha.

For dimethyldisulfide the application rate is preferably from 1 g/ha to 100 kg/ha, more preferably from 10 g/h to 100 kg/ha arid especially from 10 g/ha to 50 kg/ha.

The compositions according to the invention, or the active ingredient A and dimethyl disulfide, can be formulated in a manner known per se, for example in the form of directly sprayable solutions, powders and suspensions or in the form of highly concentrated aqueous, oily or other suspensions, dispersions, emulsions, oil dispersions, pastes, dusts, materials for spreading or granules and applied by spraying, atomizing, dusting, spreading or pouring. The use form depends on the intended purpose; in any case, it should ensure as fine and uniform as possible a distribution of the mixture according to the invention.

The formulations are prepared in a manner known per se, for example by adding solvents and/or carriers. Frequently, inert additives and surface-active materials, for example emulsifiers or dispersants, are admixed to the formulations.

Suitable surface-active materials are the alkali metal, alkaline earth metal and ammonium salts of aromatic sulfonic acids, for example lignosulfonic acid, phenolsulfonic acid, naphthalene- and dibutylnaphthalenesulfonic acid, and of fatty acids, of alkyl- and alkylarylsulfonates, of alkyl, lauryl ether and fatty alcohol sulfates, and the salts of sulfated hexa-, hepta- and octadecanols or fatty alcohol glycol ethers, condensates of sulfonated naphthalene and its derivatives with formaldehyde, condensates of naphthalene or of the naphthalenesulfonic acids with phenol and formaldehyde, polyoxyethylene octyl phenyl ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensate, ethoxylated castor oil, polyoxyethylene alkyl ethers or polyoxypropylene, lauryl alcohol polyglycol ether acetate, sorbitol esters, lignin-sulfite waste liquors, or methylcellulose.

In a preferred embodiment of the invention, the active component A is selected among compounds which liberate methyl isothiocyanate under application conditions, i.e. in the presence of moisture. Preferred examples are methyldithiocarbamic acid, in particular its sodium salt (metam-sodium) and 3,5-dimethyl-1,3,5-thiadiazinane-2-thione (dazomet). In this embodiment of the invention, the active ingredient A is preferably employed in the form of a solid formulation, for example in the form of granules; or of a dust, a material for spreading and the like. In these embodiments, dimethyl disulfide is preferably employed in the form of an asorbate on a solid carrier. Solid carrier materials which are suitable are, in principle, all porous, agriculturally acceptable carriers, for example mineral earths such as silicas, silica gels, silicates, talc, kaolin, limestone, lime, chalk, boll, loess, clay, dolomite, diatomaceous earth, calcium sulfate, magnesium sulfate, magnesium oxide, ground synthetic materials, and fertilizers such as ammonium sulfate, ammonium phosphate, ammonium nitrate, ureas, and products of vegetable origin such as cereal meal, tree bark meal, wood meal and nutshell meal, cellulose powders or other solid carriers.

In another embodiment of the invention, the products comprise, as component A, chloropicrin and/or 1,3-trichloropropene. The 1,3-trichloropropene employed in these products may take the trans form, the cis form or else the form of mixtures, including mixtures of these forms with 1,3-dichloropropane. In this context, the application forms encompass all those which are suitable for agricultural products, in particular highly concentrated aqueous emulsions (emulsion concentrates) or less concentrated granular products or products for spreading.

The use examples which follow are intended to illustrate the invention but without imposing any limitation.

Testing for protective activity against *Rhizoctonia solani* in cotton by a soil treatment will be described as an example for the control of soil-dwelling fungi:

Standard soil substrate was mixed with 1% by weight of agar plugs on which *Rhizoctonia solani* was well established. To determine the infection pressure, some shallow polystyrene dishes were filled approximately 3/4 full with this soil. 20 untreated cotton seed kernels were placed into each dish and covered with a thin layer of the infected standard soil substrate. To determine the efficacy of treatments, the *Rhizoctonia solani*-infested standard soil substrate was mixed thoroughly with the product according to the invention in a final concentration (total of components A + B) of 1 % by weight or less active ingredient per unit standard soil substrate. Analogously, polystyrene dishes were filled approximately 3/4 full with the infested and treated soil. 20 untreated cotton seed kernels were placed into each dish and covered with a thin layer of the infested and with the mixed standard soil substrate. The dishes were cultured for 2 weeks in the greenhouse with a day/night rhythm at 20-25°C. The root stems of the cotton plants which had emerged were then examined for foot-rot symptoms. The number of the plants without symptoms which had emerged from the treated soil substrate was compared with the number of the plants with symptoms emerged from untreated seed which, however, had been covered with *Rhizoctonia solani*-infested soil substrate, and the percent emergence of healthy plants was determined.

Testing for the activity against *Meloidogyne spp.* in tomatoes by watering will be described as an example for the treatment of soil-living nematodes which cause the development of root knots:

The active component A and/or dimethyl disulfide were first dissolved in acetone and diluted with water to which an emulsifier had been added until the desired active ingredient concentration was reached. Dazomet was applied as a granule composition (BASAMID® from BASF Corporation).

Square greenhouse pots (5 cm) were filled with a sandy soil mixture and the soil mixture was inoculated with an aqueous suspension comprising eggs of *Meloidogyne spp (Mixture of Meloidogyne incognita and Meloidogyne hapla).* Three days after inoculation the compositions containing the active ingredient were applied to the pots and the pots were coverd. The amounts of active ingredient are given in tables 1 to 7. One week after treatment, tomato plants cv. "Bonny Best" were transplanted individually into the pots. The plants were subsequently grown for 2 - 3 weeks in the greenhouse. For the evaluation, the roots were washed free from sand and loam. The root knots in the root system of each plant were counted. Each treatment had been carried out in triplicate. The percentage reduction of the development of root knot was determined in comparison with the infestation of the untreated plants. The median number of galls per root system in untreated plants was about 22.

Observed efficacy OE and expected efficacy EE were calculated from the following equations I and II:

$$\text{I:} \qquad OE\ [\%] = (a - b)\ /\ a \cdot 100$$

a: median number of galls/root system of in untreated plants
a: median number of galls/root system of in treated plants

$$\text{II:} \qquad EE\ [\%] = OE(A) + [100 - OE(A)] * OE(B)\ /\ 100$$

OE(A) = observed efficacy for compound A, applied alone
OE(B) = observed efficacy for dimethyl disulfide, applied alone

Table 1: Application of dimethyl disulfide alone

| Application Rate [l/ha] | Observed efficacy % |
|---|---|
| 0.0016 | 0 |
| 0.0031 | 30 |
| 0.0063 | 16 |
| 0.0125 | 0 |
| 0.075 | 7 |
| 0.15 | 21 |
| 0.75 | 0 |
| 1.5 | 12 |
| 10 | 7 |
| 21 | 30 |

Table 2: Application of dazomet alone

| Application Rate [kg/ha] | Observed efficacy % |
|---|---|
| 0.1978 | 2 |
| 0.9891 | 2 |
| 1.978 | 0 |

Table 3: Application of chloropicrin alone

| Application Rate [l/ha] | Observed efficacy % |
|---|---|
| 0.466 | 2 |
| 0.838 | 0 |
| 1.862 | 0 |
| 4.656 | 16 |
| 9.312 | 0 |
| 27.936 | 0 |

Table 4: Application of 1,3-dichloropropene alone

| Application Rate [l/ha] | Observed efficacy % |
|---|---|
| 0.0031 | 12 |
| 0.0125 | 21 |
| 10 | 12 |
| 21 | 7 |

Table 5: Application of dimethyl disulfide and dazomet

| Application Rate | | Observed efficacy | Expected efficacy |
|---|---|---|---|
| Dimethyldisulfid [l/ha] | Dazomet [kg/ha] | [%] | [%] |
| 0.0016 | 0.1978 | 7 | 2 |
| 0.0031 | 0.1978 | 2 | 31 |
| 0.0063 | 0.1978 | 53 | 18 |
| 0.0125 | 0.1978 | 16 | 2 |
| 0.075 | 0.1978 | 7 | 9 |
| 0.15 | 0.1978 | 35 | 23 |
| 0.75 | 0.1978 | 7 | 2 |
| 1.5 | 0.1978 | 58 | 14 |
| 10 | 0.1978 | 53 | 9 |
| 21 | 0.1978 | 26 | 31 |
| 0.0016 | 1.978 | 7 | 0 |
| 0.0031 | 1.978 | 63 | 30 |
| 0.0063 | 1.978 | 72 | 16 |
| 0.0125 | 1.978 | 63 | 0 |

(continued)

| Application Rate | | Observed efficacy | Expected efficacy |
|---|---|---|---|
| Dimethyldisulfid [l/ha] | Dazomet [kg/ha] | [%] | [%] |
| 0.075 | 1.978 | 2 | 7 |
| 0.15 | 1.978 | 58 | 21 |
| 0.75 | 1.978 | 77 | 0 |
| 1.5 | 1.978 | 12 | 12 |
| 10 | 1.978 | 77 | 7 |
| 21 | 1.978 | 26 | 30 |

Table 6: Application of dimethyl disulfide and chlorpicrin

| Application Rate | | Observed efficacy | Expected efficacy |
|---|---|---|---|
| Dimethyldisulfid [l/ha] | chlorpicrin [l/ha] | [%] | [%] |
| 0.0031 | 4.656 | 40 | 29 |
| 0.0063 | 4.656 | 44 | 18 |
| 0.0125 | 4.656 | 30 | 16 |
| 0.075 | 4.656 | 21 | 16 |
| 0.15 | 4.656 | 53 | 29 |
| 0.75 | 4.656 | 26 | 18 |
| 1.5 | 4.656 | 26 | 29 |
| 10 | 4.656 | 49 | 26 |
| 0.0016 | 27.936 | 44 | 7 |
| 0.0031 | 27.936 | 40 | 16 |
| 0.0125 | 27.936 | 40 | 0 |
| 0.075 | 27.936 | 58 | 0 |
| 0.15 | 27.936 | 77 | 16 |
| 0.75 | 27.936 | 49 | 2 |
| 1.5 | 27.936 | 53 | 16 |
| 10 | 27.936 | 40 | 12 |
| 21 | 27.936 | 58 | 26 |

Table 7: Application of dimethyl disulfide and 1,3-dichloropropene (1,3-D)

| Application Rate | | Observed efficacy | Expected efficacy |
|---|---|---|---|
| Dimethyldisulfid [l/ha] | (1,3-D) [l/ha] | [%] | [%] |
| 0.0031 | 0.0031 | 44 | 26 |
| 0.0125 | 0.0125 | 63 | 21 |
| 10 | 10 | 63 | 23 |
| 21 | 21 | 86 | 31 |

**EP 1 601 250 B1**

**Claims**

1. A composition for controlling plant-injurious organisms comprising:

    i. at least one active component A selected from among 1,3-dichloropropene, trichloronitromethane (chloropicrin), methyl isothiocyanate and substances which release methyl isothiocyanate, and
    ii. dimethyl disulfide as component B.

2. A composition as claimed in claim 1 comprising, as component A, the sodium salt of methyldithiocarbamic acid (metam-sodium) and/or 3,5-dimethyl-1,3,5-thiadiazinane-2-thione (dazomet).

3. A composition as claimed in claim 2 in the form of a solid preparation comprising dimethyl disulfide in the form of an adsorbate on a solid, agriculturally acceptable carrier material.

4. A composition as claimed in claim 1, comprising, as component A, 1,3-dichloropropene and/or trichloronitromethane.

5. A composition as claimed in any of the preceding claims, comprising the active components A and B in a weight ratio A:B in the range of 1:50 to 50:1.

6. A method for controlling plant-injurious organisms, which comprises applying the active components A as defined in claim 1 jointly with dimethyl disulfide in such an amount that they bring about the destruction of plant-injurious organisms, their eggs or their larvae, on the plant-injurious organisms, their eggs, their larvae or their environment.

7. A method as claimed in claim 6, wherein the plant-injurious organisms are selected from among nematodes and plant-injurious fungi.

8. A method as claimed in claim 6 or 7, wherein the active components A and B are jointly incorporated into soils.

9. A method as claimed in claim 8, wherein dimethyl disulfide is applied at a rate of from 50 to 500 kg/ha.

10. A method as claimed in claim 8 or 9, wherein the active component A is applied at a rate of 10 to 1 000 kg/ha.

11. The use of a composition as claimed in any of claims 1 to 5 for the disinfection of soils.

12. The use as claimed in claim 11 for controlling nematodes and harmful fungi in soils.


**Patentansprüche**

1. Zusammensetzung zur Bekämpfung von pflanzenschädigenden Organismen, enthaltend:

    i. wenigstens eine aktive Komponente A, welche ausgewählt ist unter 1,3-Dichlorpropen, Trichlornitromethan (Chlorpikrin), Methylisothiocyanat und Verbindungen, die Methylisothiocyanat freisetzen, und
    ii. Dimethyldisulfid als Komponente B.

2. Zusammensetzung gemäß Anspruch 1, enthaltend als Komponente A das Natriumsalz der Methyldithiocarbamidsäure (Metam-Natrium) und/oder 3,5-Dimethyl-1,3,5-thiadiazinan-2-thion (Dazomet).

3. Zusammensetzung gemäß Anspruch 2 in Form einer Feststoffzubereitung, enthaltend Dimethyldisulfid in Form eines Adsorbates auf einem festen, landwirtschaftlich geeigneten Trägermaterial.

4. Zusammensetzung gemäß Anspruch 1, enthaltend als Komponente A 1,3-Dichlorpropen und/oder Trichlornitromethan.

5. Zusammensetzung nach einem der vorhergehenden Ansprüche, enthaltend die aktiven Komponenten A und B in einem Massenverhältnis A:B im Bereich von 1:50 bis 50:1.

6. Verfahren zur Bekämpfung von pflanzenschädigenden Organismen, wobei man die aktive Komponente A gemäß Anspruch 1 zusammen mit Dimethylsulfid in einer Menge, welche die Zerstörung von pflanzenschädigenden Organismen, ihren Eiern oder Larven bewirkt, auf die pflanzenschädigenden Organismen, ihre Eier, ihre Larven oder ihre Umgebung aufbringt.

**7.** Verfahren gemäß Anspruch 6, wobei die pflanzenschädigenden Organismen ausgewählt sind unter Nematoden und pflanzenschädigenden Pilzen.

**8.** Verfahren gemäß Anspruch 6 oder 7, wobei die aktiven Komponenten A und B zusammen in Böden eingebracht werden.

**9.** Verfahren gemäß Anspruch 8, wobei Dimethyldisulfid in einer Menge von 50 bis 500 kg/ha eingesetzt wird.

**10.** Verfahren gemäß Anspruch 8 oder 9, wobei die aktive Komponente A in einer Menge von 10 bis 1000 kg/ha eingesetzt wird.

**11.** Verwendung einer Zusammensetzung gemäß einem der Ansprüche 1 bis 5 zur Desinfektion von Böden.

**12.** Verwendung gemäß Anspruch 11 zur Bekämpfung von Nematoden und schädlichen Pilzen in Böden.

## Revendications

**1.** Composition pour la lutte contre des organismes nuisibles pour les plantes, comprenant :

> i. au moins un composant A choisi parmi le 1,3-dichloropropène, le trichloronitrométhane (chloropicrine), l'isothiocyanate de méthyle et des substances qui libèrent de l'isothiocyanate de méthyle, et
> ii. du sulfure de diméthyle en tant que composant B.

**2.** Composition selon la revendication 1, comprenant, en tant que composant A, le sel sodique d'acide méthyldithiocarbamique (métam-sodium) et/ou la 3,5-diméthyl-1,3,5-thiadiazinane-2-thione (dazomet).

**3.** Composition selon la revendication 2, sous la forme d'une préparation solide comprenant du sulfure de diméthyle sous la forme d'un produit d'adsorption sur une matière de support solide acceptable en agriculture.

**4.** Composition selon la revendication 1, comprenant, en tant que composant A, du 1,3-dichloropropène et/ou du trichloronitrométhane.

**5.** Composition selon l'une quelconque des revendications précédentes, comprenant les composants actifs A et B en un rapport pondéral A:B dans la plage de 1:50 à 50:1.

**6.** Procédé pour la lutte contre des organismes nuisibles pour les plantes, qui comprend le fait de laisser sur les organismes nuisibles pour les plantes, leurs oeufs, leurs larves ou leur environnement, les composants actifs A, tels que définis dans la revendication 1, conjointement avec du sulfure de diméthyle, en une quantité telle qu'ils entraînent la destruction des organismes nuisibles pour les plantes, de leurs oeufs ou de leurs larves.

**7.** Procédé selon la revendication 6, dans lequel les organismes nuisibles pour les plantes sont choisis parmi les nématodes et les champignons nuisibles pour les plantes.

**8.** Procédé selon la revendication 6 ou 7, dans lequel les composants actifs A et B sont incorporés conjointement dans des sols.

**9.** Procédé selon la revendication 8, dans lequel le sulfure de diméthyle est appliqué à une dose de 50 à 500 kg/ha.

**10.** Procédé selon la revendication 8 ou 9, dans lequel le composant A est appliqué à une dose de 10 à 1 000 kg/ha.

**11.** Utilisation d'une composition selon l'une quelconque des revendications 1 à 5 pour la désinfection de sols.

**12.** Utilisation selon la revendication 11, pour la lutte contre des nématodes et des champignons nuisibles dans des sols.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11180807 B

- WO 01074083 A

**Non-patent literature cited in the description**

- Römpp Chemielexikon. Georg Thieme-Verlag, 1996, 485

- Ullmann's Enzydopedia of Industrial Chemistry. Wiley-VCH, 1997